# EUROPÄISCHE PATENTSCHRIFT

(11) **EP 2 694 163 B1**
(45) Veröffentlichungstag und Bekanntmachung des Hinweises auf die Patenterteilung: **05.06.2019**
(21) Anmeldenummer: 12723526.5
(22) Anmeldetag: 03.04.2012
(51) Int. Cl.: A62B 18/00, A62B 7/10, A62B 17/00, B01D 46/42

(54) **VORRICHTUNG ZUM REINIGEN VON KONTAMINIERTER LUFT**
DEVICE FOR CLEANING CONTAMINATED AIR
DISPOSITIF POUR PURIFIER DE L'AIR CONTAMINÉ

(30) Priorität: 07.04.2011 CH 624112011
(43) Veröffentlichungstag der Anmeldung: 12.02.2014
(73) Patentinhaber: TB-Safety AG, 5070 Frick (CH)
(72) Erfinder: KEEL, Niklaus, CH-5078 Effingen (CH)
(74) Vertreter: Spierenburg, Pieter
(86) Internationale Anmeldenummer: PCT/IB2012/051633
(87) Internationale Veröffentlichungsnummer: WO 2012/137135

(56) Entgegenhaltungen:
- EP-A1- 0 558 147
- WO-A2-01/78839
- GB-A- 2 209 474
- US-A1- 2009 266 361

## Beschreibung

Die Erfindung betrifft eine Vorrichtung zum Reinigen von kontaminierter Luft nach dem Oberbegriff des Patentanspruchs 1.

### STAND DER TECHNIK

Vorrichtungen zum Filtrieren von kontaminierter Luft sind schon seit längerem bekannt und bestehen aus einem Luftfilter und einem anschliessenden Ansauggebläse, um die Luft in einen Schutzanzug hineinzusaugen. Im Schutzanzug ist ein Ventil vorgesehen, welches bei einem vorbestimmten Überdruck sich öffnet, so dass die verbrauchte Luft aus dem Schutzanzug herausgelassen werden kann. Diese Vorrichtungen haben den Nachteil, dass das Innere beim Abschrauben der Filter kontaminiert werden kann.

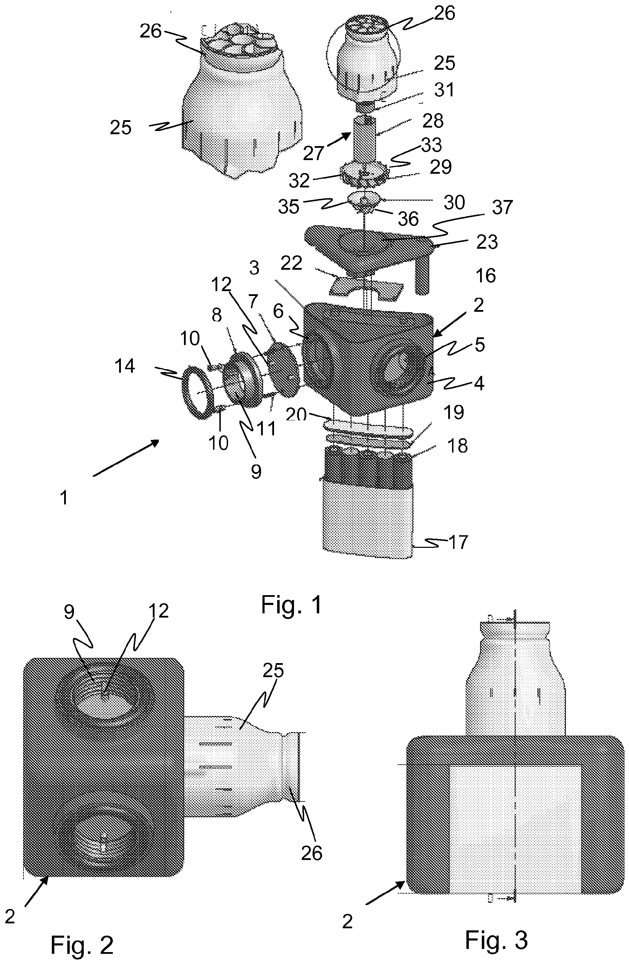

Aus GB 2 209 747 A ist ein Atemschutzgerät mit einer Pumpeinheit beschrieben, welche von einem Motor angetrieben wird, der fest im Gehäuse montiert ist. Auf der Spindel des Motors ist ein Impeller befestigt. Der Impeller weist eine Vielzahl von radialen Blättern auf, die mit einem fest am Gehäuse angebrachten Diffusor zusammenwirkt. Der Diffusor weist bogenförmige Rippen auf, die einstückig mit dem Gehäuse sind. Das Gehäuse umschliesst den Impeller mit einem Ringraum (siehe Figur 2).

Der Luftduchsatz der obigen Pumpeneinheit ist unzureichend. Zudem entsteht durch das Zusammenwirken der Impellerblätter mit den Rippen des Diffusors ein störendes Pfeifgeräusch.

### AUFGABE DER ERFINDUNG

Es ist Aufgabe der vorliegenden Erfindung, eine Vorrichtung der obengenannten Art derart zu verbessern, dass ein höherer Luftdurchsatz erreicht wird und eine gründliche Reinigung der Vorrichtung nach Gebrauch weitestgehend unterlassen werden kann

### GEGENSTAND DER ERFINDUNG

Diese Aufgabe wird durch eine Vorrichtung zum Filtrieren von kontaminierter Luft mit den Merkmalen des Patentanspruchs 1 gelöst.

Die erfindungsgemässe Vorrichtung hat den grossen Vorteil, dass durch die Ausbildung des Ansauggebläses mit einer Leitschaufel, einem Impeller und einer kaminförmigen Hülle eine wesentlich höhere Saugleistung erreicht wird.

Es ist ferner von Vorteil, wenn der Impeller eine konische Mantelfläche und daran angeformte bogenförmige Impellerblätter aufweist, welcher von einem Trichter am Filtergehäuse umschlossen ist, um einen grösseren Unterdruck in dem Filtergehäuse zu erlangen. Es hat sich dazu bewährt, dass die Leitschaufel eine kreiszylindrische Mantelfläche mit daran angeformten angewinkelten Schaufelblättern aufweist. Vorzugsweise ist der Eintritt des Filtergehäuses mit einer Klappe versehen, welche von einem Sicherheitsstift beim Aufschrauben des Luftfilters betätigbar ist. Dadurch wird erst Luft in das Luftgehäuse angesaugt, wenn alle Filter richtig montiert worden sind. Die Klappe ist dabei mit Vorteil mit einem federelastischen Verschlussmittel versehen, um die Klappe gegen die Eintrittsöffnung des Gehäuses zu drücken. Wenn die Klappe mit einem Magneten versehen und ein Hall-Element am Filtergehäuse vorgesehen ist, welches durch den Magneten schaltbar ist, kann gleichzeitig der Elektromotor des Ansauggebläses erst dann eingeschaltet werden, wenn alle Filter richtig montiert sind. Dies verhindert ebenfalls, dass das Filtergehäuse und das Ansauggebläse kontaminiert werden kann. Ferner ist das Filtergehäuse bevorzugt zylindrisch mit einer Grundfläche eines rechtwinkligen gleichseitigen Dreiecks ausgebildet, um die Filter platzsparend montieren zu können. Des Weiteren ist mit Vorteil ein mechanischer Schutzmechanismus vorgesehen ist, der verhindert, dass das Innere der Vorrichtung kontaminiert wird, wenn die Filter nicht eingeschraubt sind.

### BESCHREIBUNG EINES AUSFÜHRUNGSBEISPIELES DER ERFINDUNG

Weitere Vorteile der Erfindung ergeben sich aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine Explosionsdarstellung einer Reinigungsvorrichtung,
- Fig. 2: eine perspektivische Ansicht der Reinigungsvorrichtung ohne Filter,
- Fig. 3: eine perspektivische Ansicht der Reinigungsvorrichtung von der Rückseite,
- Fig. 4: einen Querschnitt durch die Ebene D-D der Fig. 3,
- Fig. 5: eine weitere perspektivische Ansicht der Reinigungsvorrichtung,
- Fig. 6: eine Obenansicht der Reinigungsvorrichtung ohne Filter,
- Fig. 7: ein Detail des Schraubgewindes zur Befestigung eines Filters,
- Fig. 8: eine andere Ausführung der Reinigungsvorrichtung mit vier Filtern in perspektivischer Darstellung,
- Fig. 9: eine Obenansicht auf die Reinigungsvorrichtung der Fig. 8 ohne Filter, und
- Fig. 10: eine Detaildarstellung der Anzeige an der Reinigungsvorrichtung der Figuren 8 und 9.

In den Zeichnungen sind für dieselben Elemente dieselben Bezugszeichen verwendet worden, wenn nichts anderes erwähnt ist.

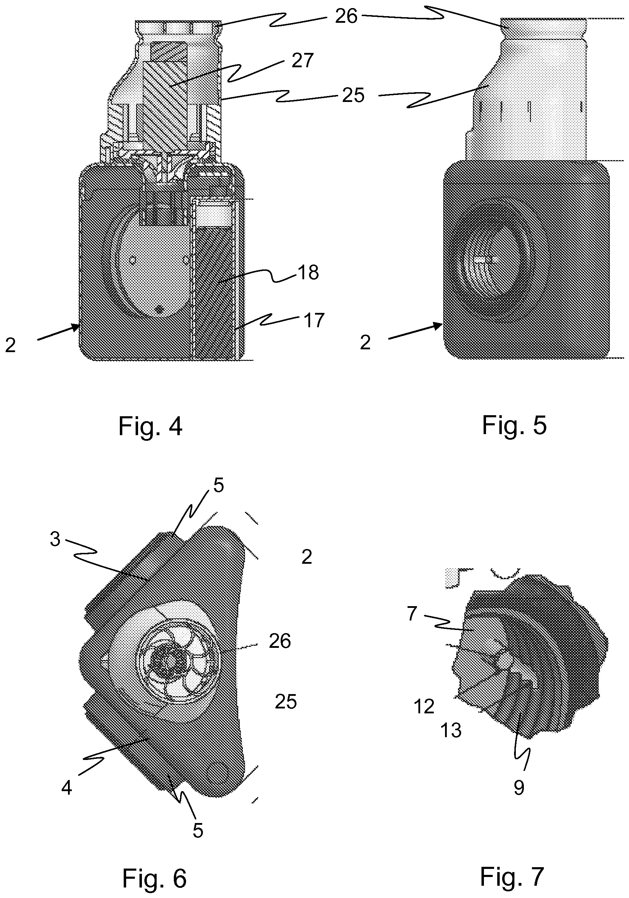

In Figur 1 ist eine Reinigungsvorrichtung 1 in Explosionsdarstellung und in de Figuren 2 bis 7 sind verschiedene Details in perspektivischer Darstellung, im Querschnitt und in einer Detailansicht gezeigt. Die Reinigungsvorrichtung 1 weist ein zylindrisches Filtergehäuse 2 mit einer Grundfläche eines rechtwinkligen Dreiecks mit zwei gleichen Seiten auf. In den rechtwinklig zueinanderstehenden Flächen 3 und 4 des Filtergehäuses 2 ist je ein kreiszylindrischer Flansch 5 angeformt, welcher einen Innenrand 6 aufweist. Es ist nun eine kreisförmige Platte 7 mit einem geringeren Durchmesser als der Flansch 5 vorgesehen, so dass zwischen dem Rand der Platte 7 und dem Flansch 5 einen geringen kreisringförmigen Anstand besteht. Ferner ist ein Flansch 8 mit einem Innengewinde 9 vorgesehen, welches mit einem Presssitz in den Flansch 5 befestigt werden kann. Der Abstand zwischen dem Flansch 8 und dem Innenrand 6 wird durch zwei Hülsen 10 festgelegt. Mittels zwei Zugfeder 11 wird die als Staubklappe dienende Platte 7 gegen das Innengewinde 9 gezogen. Der Durchmesser der Platte 7 ist dabei wiederum grösser als der Innendurchmesser des Innengewindes 9, so dass die Platte 7 staubdicht gegen das Innengewinde 9 abschliesst. Ferner sind zwei Stifte 12 an der Platte 7 vorgesehen, welche je in einer halbzylindrischen Führung 13 im Innengewinde 9 geführt sind (vgl. auch Fig. 7). Zwischen dem Flansch 5 und dem Flansch 8 ist ein O-Ring 14 vorgesehen. An der Unterseite des Filtergehäuses 2 ist ein Schlitz einer kreisbogenförmigen Aufnahme 16 vorgesehen, in welchen ein ebenso geformtes Batteriegehäuse 17 mit aufladbaren Batterien 18 hineingeschoben werden kann. Die Batterien 18 sind über eine Leiterplatine 19 elektrisch miteinander verbunden. Das Batteriegehäuse 17 wird ferner mit einem Deckel 20 abgeschlossen. Oberhalb der Aufnahme 16 ist eine weitere Leiterplatine 22 angeordnet, welche zwischen einem Deckel 23 des Gehäuses 2 und der Aufnahme 16 festgeklemmt wird. Oberhalb des Deckels 23 ist eine kaminförmige Hülle 25 mit einer rosettenartigen Austritt 26 vorgesehen, welche ein Ansauggebläse 27 mit einem kleinen Elektromotor 28, einer Leitschaufel 29 und einem Impeller 30 aufweist. Oberhalb des Elektromotors 28 ist eine Akustikanzeige 31 in der Form eines Summers oder dergleichen angeordnet.

Die Leitschaufel 29 hat eine kreiszylindrische Mantelfläche 32 mit daran angeformten angewinkelten Schaufelblättern 33. Im Allgemeinen ist ein Impeller ein von einem ring- oder röhrenförmigen Gehäuse umschlossener Propeller. Die Ummantelung bewirkt eine Senkung des Luftwiderstandes an den Propellerblättern, was einen besseren Wirkungsgrad ergibt. Der Impeller 30 ist mit einer konusförmigen Mantelfläche 35 und daran angeformte bogenförmige Impellerblätter 36 ausgebildet. Im Deckel 23 ist einen Trichter 37 geformt, welcher den Impeller 30 umschliesst, wodurch das Gebläse 27 eine sehr starke Saugleistung erhält.

In die Innengewinden 9 der beiden Flanschen 8 können nun verschiedenartige Filter je nach Anwendung aufgeschraubt werden. Es gibt Filter, welche speziell geeignet sind für Arbeiten in einem Kernkraftwerk, in einem Sicherheitsspital oder in einem ABC-Labor. Solche Filter sind allgemein bekannt und können beispielsweise bei der Firma Avec Chem s.r.o. CZ-530 02 Pardubice bezogen werden.

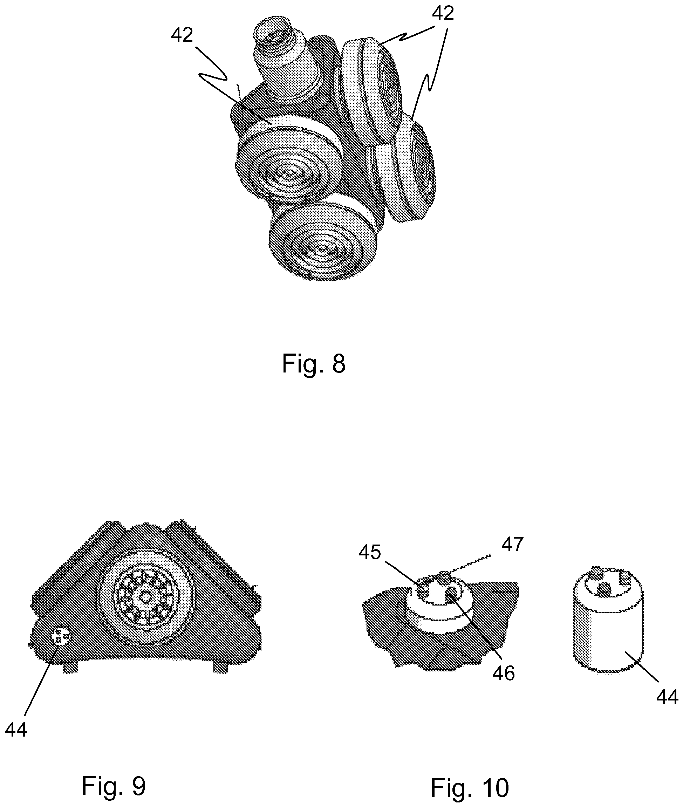

In Figur 8 ist eine Reinigungsvorrichtung 41 dargestellt, welche für vier Filter 42 ausgelegt ist.

Figur 9 zeigt die Reinigungsvorrichtung 1 in Obenansicht. Dabei ist auch eine optische Warneinrichtung 44 mit einer Leuchtdiode 45 zur Anzeige des Ladezustandes der Batterien 18, mit einer Leuchtdiode 46 zur Anzeige der Funktionsfähigkeit der angeschraubten Filter und einer Leuchtdiode 47 zur Anzeige der Funktionsfähigkeit des Gebläses vorgesehen. In Detail ist diese Warneinrichtung 44 auch in Figur 10 ersichtlich.

Das Gebläse 27 hat einen Luftdurchsatz von bis zu 800 l/min auf äusserst kleinem Raum. Das Kernstück des Gebläses ist der Impeller 30, welcher mit etwa 30'000 Umdrehungen pro Minute vom Elektromotor 28 angetrieben wird. Die angesaugte Luft wird dabei in eine Haube, einen Spezialanzug oder einer Einhausung einer Patiententrage gepumpt. Die Luftmenge wird durch die Zulassung der Filter bestimmt.

### Funktionsweise

Die Reinigungsvorrichtung 1 wird unter der Haube bzw. unter dem Anzug getragen. Nach Einschieben der aufladbaren Batterien 18 wird die Stromversorgung auf vollen Ladezustand geprüft und optisch wie akustisch die Funktionsfähigkeit bestätigt. Das Gebläse 27 schaltet automatisch ein, wenn alle Filter richtig eingeschraubt sind. Sobald ein Filter losgeschraubt wird, schaltet das Gebläse 27 wieder aus. Die Filter werden durch Öffnungen an der Haube oder am Anzug eingeschraubt. Die verschiebbaren Staubklappen 7 verhindern ein Kontaminieren des Innenraums der Reinigungsvorrichtung 1. Die optische Anzeige kann über ein Verlängerungskabel an der Innenseite der Haube platziert werden. Die angesaugte Luftmenge wird durch den maximalen Durchsatz der Filter bestimmt.

Der Volumenstrom ist proportional zum Druck. Mittels eines Drucksensors wird der Unterdruck hinter den Filtern gemessen. Ebenfalls wird der Überdruck im Luftauslass mittels eines Drucksensors gemessen. In einem Regelkreis werden die gemessenen Drücke mit vorbestimmten Werten verglichen. Bei Abweichung wird die Drehzahl des als Asynchronmotor ausgebildeten Elektromotors 28 nachgeregelt, bis die Druckwerte wieder stimmen. Wenn nicht mehr nachgeregelt werden kann, wird der Benutzer optisch und akustisch gewarnt.

Die Stromversorgung besteht aus einem Paket von fünf LI Ion Zellen mit einer Kapazität von je 3.1 Ah, welche in Serie geschaltet sind. Mit einem Batterie-Managementsystem wird jede einzelne Batterie 18 beim Lade- wie Entlade-vorgang überwacht. Durch diese Überwachung kann die Ladekapazität der Batterien über ihre ganze Lebensdauer gleichbleibend gehalten werden. Eine Schutzschaltung verhindert, dass die Batterien falsch angeschlossen werden können. Das Paket kann nur in einer bestimmten Weise in das Gerät oder in den Ladestation eingeschoben werden, d.h. ist verpolungssicher. Das Paket wird in der Ladestation mit einem speziellen Ladeverfahren aufgeladen, welches durch das Batterie-Managementsystem überwacht und gesteuert wird. Die Batterien 18 können längere Zeit in der Ladestation verbleiben, wobei der Ladevorgang in einer Erhaltungsladung übergeht.

Um zu verhindern, dass das Innere der Reinigungsvorrichtung kontaminiert wird, wenn die Filter nicht eingeschraubt sind, ist ein mechanischer Schutzmechanismus wie eine Art Schraubdeckel oder dergleichen vorgesehen.

## Patentansprüche

1. Vorrichtung (1) zum Filtrieren von kontaminierter Luft bestehend aus einem Luftfilter, einem Filtergehäuse (2), auf welches das Luftfilter mittels einer Schraubverbindung befestigbar ist und an welchem eine kaminförmige Hülle (25) vorgesehen ist, einem von einem Elektromotor (28) angetriebenen und in der kaminförmigen Hülle (25) drehbar angeordneten Ansauggebläse (27), welches einen Impeller (30) aufweist, und einer Batterie (18) für den Antrieb des Elektromotors, **dadurch gekennzeichnet, dass** das Ansauggebläse (27) ferner eine Leitschaufel (29) aufweist, wobei die Leitschaufel (29) eine kreiszylindrische Mantelfläche (32) mit daran angeformten angewinkelten Schaufelblättern (33) aufweist, und der Impeller (30) eine konische Mantelfläche (35) und daran angeformte bogenförmige Impellerblätter (36) aufweist, und der Impeller (30) von einem vom Filtergehäuse (2) geformten Trichter (37) umschlossen ist, um eine starke Saugleistung des Ansauggebläses (27) zu bewirken.

2. Vorrichtung nach Anspruch 1 **dadurch gekennzeichnet, dass** der Eintritt des Filtergehäuses (2) mit einer Klappe (7) versehen ist, welche von einem Sicherheitsstift (12) beim Aufschrauben des Luftfilters betätigbar ist.

3. Vorrichtung nach Anspruch 2, **dadurch gekennzeichnet, dass** die Klappe (7) mit einem federelastischen Verschlussmittel (11) versehen ist, um die Klappe (7) gegen die Eintrittsöffnung des Gehäuses zu drücken.

4. Vorrichtung nach Anspruch 2 oder 3, **dadurch gekennzeichnet, dass** die Klappe (7) mit einem Magneten versehen ist und ein Hall-Element am Filtergehäuse (2) vorgesehen ist, welches durch den Magneten schaltbar ist.

5. Vorrichtung nach einem der Ansprüche 1 bis 4, **dadurch gekennzeichnet, dass** das Filtergehäuse (2) zylindrisch mit einer Grundfläche eines rechtwinkligen gleichseitigen Dreiecks ausgebildet ist.

## Claims

1. Device (1) for filtering contaminated air, consisting of an air filter, a filter housing (2) to which the air filter can be fastened by means of a screw connection and on which a chimney-shaped casing (25) is provided, an intake fan (27) which is driven by an electric motor (28), is arranged rotatably in the chimney-shaped casing (25) and has an impeller (30), and a battery (18) for driving the electric motor, **characterized in that** the intake fan (27) further has a guide vane (29), wherein the guide vane (29) has a circular cylindrical outer surface (32) with angled vane blades (33) integrally formed thereon, and the impeller (30) has a conical jacket surface (35) and arcuate impeller blades (36) integrally formed thereon, and the impeller (30) is enclosed by a funnel (37) formed by the filter housing (2) in order to effect a strong suction power of the intake fan (27).

2. Device according to claim 1, **characterized in that** the inlet of the filter housing (2) is provided with a flap (7) which can be actuated by a safety pin (12) when the air filter is screwed on.

3. Device according to claim 2, **characterized in that** the flap (7) is provided with a resilient closure means (11) for pressing the flap (7) against the inlet opening of the housing.

4. Device according to claim 2 or 3, **characterized in that** the flap (7) is provided with a magnet and a Hall element is provided on the filter housing (2) which can be switched by the magnet.

5. Device according to one of claims 1 to 4, **characterized in that** the filter housing (2) is cylindrical with a base surface of a right-angled equilateral triangle.

## Revendications

1. Dispositif (1) pour filtrer de l'air contaminé, constitué d'un filtre à air, d'un boîtier de filtre (2) sur lequel le filtre à air peut être fixé au moyen d'un raccord vissé et sur lequel est prévue une enveloppe en forme de cheminée (25), d'un ventilateur aspirant (27) entraîné par un moteur électrique (28) qui est disposé rotatif dans l'enveloppe en forme de cheminée (25) et qui présente une roue (30), et d'une batterie (18) pour l'entraînement du moteur électrique, **caractérisé en ce que** le ventilateur d'aspiration (27) présente en outre une aube directrice (29), l'aube directrice (29) présentant une surface extérieure cylindrique circulaire (32) sur laquelle sont formées des pales coudées (33), et la roue (30) présente une surface extérieure conique (35) sur laquelle sont formées des pales de roue arquées (36), et la roue (30) est entourée par un entonnoir (37) formé par le boîtier de filtre (2) pour produire une forte puissance d'aspiration du ventilateur aspirant (27).

2. Dispositif selon la revendication 1, **caractérisé en ce que** l'entrée du boîtier de filtre (2) est munie d'un volet (7) qui peut être actionné par une goupille de sécurité (12) lorsque l'on visse le filtre à air.

3. Dispositif selon la revendication 2, **caractérisé en ce que** le volet (7) est muni d'un moyen de fermeture élastique (11) pour presser le volet (7) contre l'ouverture d'entrée du boîtier.

4. Dispositif selon la revendication 2 ou 3, **caractérisé en ce que** le volet (7) est muni d'un aimant et un élément à effet Hall, qui peut être commuté par l'aimant, est prévu sur le boîtier de filtre (2).

5. Dispositif selon l'une des revendications 1 à 4, **caractérisé en ce que** le boîtier de filtre (2) présente une forme cylindrique avec une surface de base d'un triangle isocèle rectangle.
